Europäisches Patentamt

European Patent Office

Office européen des brevets

(11) Veröffentlichungsnummer : **0 205 845**
B1

(12) **EUROPÄISCHE PATENTSCHRIFT**

(45) Veröffentlichungstag der Patentschrift :
01.02.89

(51) Int. Cl.⁴ : **H 01 Q 21/24**, G 01 S 3/14

(21) Anmeldenummer : 86106152.1

(22) Anmeldetag : 06.05.86

(54) Verfahren zum Erzeugen eines Steuersignals zur Polarisationsausrichtung einer Antenne.

(30) Priorität : 31.05.85 DE 3519528

(43) Veröffentlichungstag der Anmeldung :
30.12.86 Patentblatt 86/52

(45) Bekanntmachung des Hinweises auf die Patenterteilung : 01.02.89 Patentblatt 89/05

(84) Benannte Vertragsstaaten :
DE FR GB IT

(56) Entgegenhaltungen :
EP--A-- 0 093 234
WO--A--84 /033 60
DE--C-- 2 507 282
GB--A-- 2 059 722
US--A-- 2 547 890
US--A-- 3 500 207
US--A-- 3 761 927
NACHRICHTENTECHNISCHE ZEITSCHRIFT N.T.Z., Band 38, Nr. 7, Juli 1985, Seiten 478-480,482,483, Berlin, DE; W. STEINERT: "1-Kanal-Monopulssystem für eine einfache Antennennachführung"

(73) Patentinhaber : ANT Nachrichtentechnik GmbH
Gerberstrasse 33
D-7150 Backnang (DE)

(72) Erfinder : Steinert, Wolfgang, Dipl.-Ing.
Marktstrasse 28
D-7150 Backnang (DE)
Erfinder : Wollenhaupt, Heinz, Dipl.-Ing.
Reutlinger Strasse 16
D-7150 Backnang (DE)

**Beschreibung**

Die vorliegende Erfindung betrifft ein Verfahren zum Erzeugen eines Steuersignals zur Polarisationsausrichtung einer Antenne auf ein Bakensignal, wobei das von der Antenne empfangene Bakensignal von einer Polarisationsweiche in zwei mit den orthogonalen Polarisationsebenen der Antenne gekoppelte Signalkomponenten zerlegt wird.

Ein solches Verfahren, nach welchem eine Antenne bzw. ihr Speisesystem so ausgerichtet wird, um einer Verkopplung der von der Antenne empfangenen orthogonal polarisierten Signale entgegenzuwirken, ist z. B. aus der DE 25 07 282 C3 bekannt. Die Steuersignale für die Polarisationsnachregelung der Antenne werden bei diesem bekannten Verfahren aus zwei von der Antenne empfangenen orthogonal polarisierten Bakensignalen verschiedener Frequenzen hergeleitet. Dazu ist eine aufwendige Schaltungsanordnung, welche eine große Zahl von Filtern und Mischern aufweist, erforderlich.

Aus EP-A-0 093 234 ist es bereits bekannt, ein nach dem Monopulsverfahren erhaltenes Differenzsignal einer zyklischen Phasenzustandsänderung zu unterwerfen und anschließend mit dem zugehörigen Summensignal zu überlagern, wobei ein amplitudenmoduliertes Überlagerungssignal entsteht, aus dem Antennennachführsignale gewonnen werden.

Der Erfindung liegt nun die Aufgabe zugrunde, ein Verfahren der eingangs genannten Art anzugeben, das mit einem möglichst geringen Schaltungsaufwand realisierbar ist.

Erfindungsgemäß wird diese Aufgabe durch die im Anspruch 1 angegebenen Merkmale gelöst.

Zweckmäßige Ausführungen der Erfindung gehen aus den Unteransprüchen hervor.

Besonders vorteilhaft ist die Ausnutzung des erfindungsgemäßen Verfahrens zur Polarisationsausrichtung von Antennen in Satelliten oder in benutzernah installierten kleinen Erdfunkstellen wegen der das Verfahren ausführenden einfachen und wenig Platz in Anspruch nehmenden Schaltungsanordnung.

Anhand eines in der Zeichnung dargestellten Ausführungsbeispiels wird nachfolgend die Erfindung näher erläutert. Es zeigen :

Fig. 1 die Ausgangssignale einer Polarisationsweiche, welche das von einer Antenne empfangene Bakensignal in orthogonale Polarisationen zerlegt,

Fig. 2 die vektorielle Bestimmung eines Steuersignals für die Polarisationsausrichtung,

Fig. 3 der Amplitudenverlauf eines Steuersignals und

Fig. 4 ein Prinzipschaltbild zur Herleitung eines Steuersignals.

Um eine Antenne bzw. deren Speisesystem auf eine bestimmte Polarisationsebene ausrichten zu können, wird an die Antenne ein Bakensignal ausgesendet, welches in die gewollte Polarisationsrichtung orientiert ist.

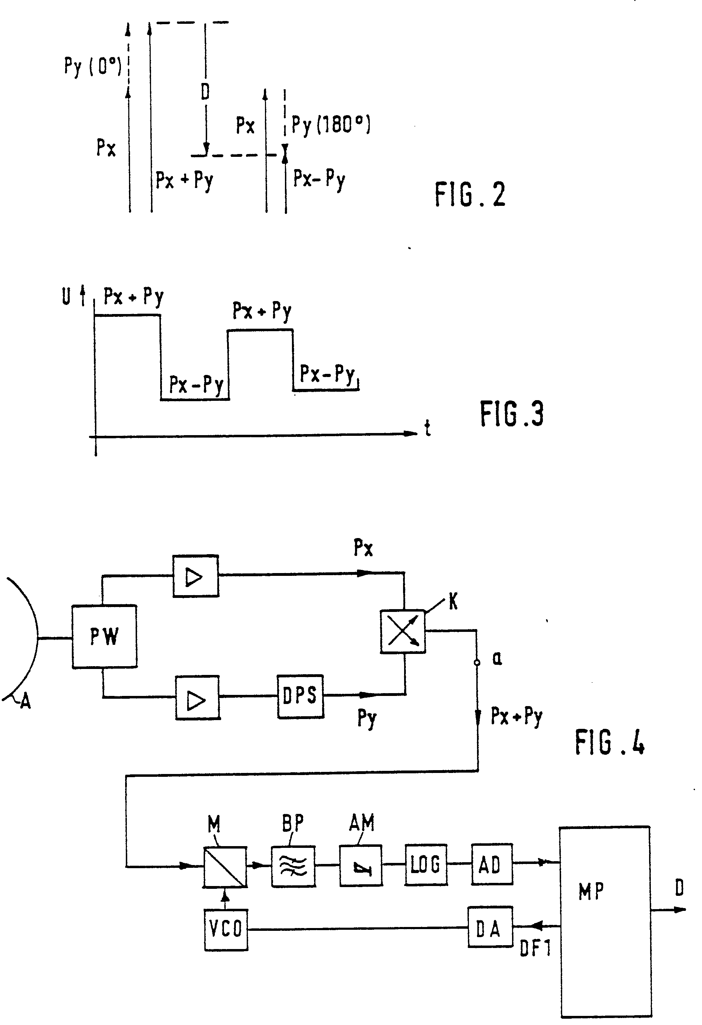

Das von der Antenne empfangene Bakensignal, deren Polarisationsebene um einen Winkel $\Theta$ gegenüber einer der orthogonalen Polarisationsebenen der Antenne verdreht ist, wird wie das Prinzipschaltbild in Fig. 4 zeigt, von einer Polarisationsweiche PW in zwei mit den beiden orthogonalen Polarisationsebenen der Antenne A gekoppelte Signalkomponenten Px und Py zerlegt.

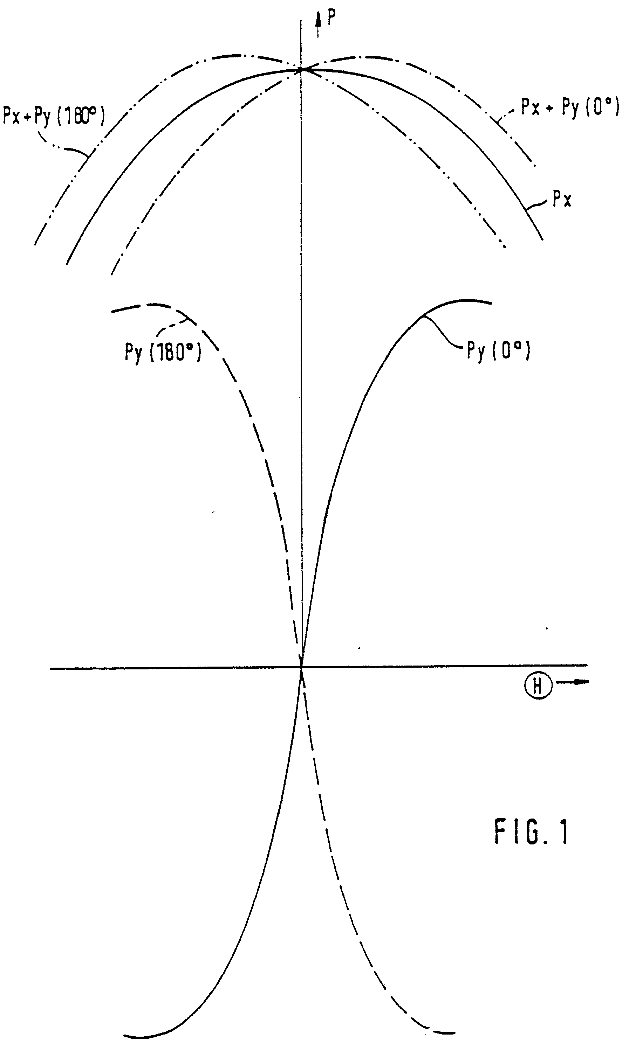

Die Fig. 1 verdeutlicht die Abhängigkeit der an den beiden Ausgängen der Polarisationsweiche PW erscheinenden Signalkomponenten Px und Py von dem Verdrehwinkel $\Theta$ der Antennenpolarisationsebene gegenüber der Polarisationsebene des empfangenen Bakensignals. Diese Abhängigkeit läßt sich folgendermaßen ausdrücken :

$$Px = B \cdot \cos \Theta \text{ und } Py = B \cdot \sin \Theta,$$

wobei B das Bakensignal ist.

Aus dem in Fig. 1 dargestellten Beispiel geht hervor, daß bei einem Verdrehwinkel von 0°, die Signalkomponente Px ein Maximum hat und die andere Signalkomponente Py verschwindet. In diesem Fall ist also die mit der Signalkomponente Px gekoppelte Polarisationsebene der Antenne genau auf die Polarisationsebene des Bakensignals ausgerichtet.

Die Ableitung eines Steuersignals für die Polarisationsausrichtung der Antenne auf das Bakensignal soll mit Hilfe des Vektordiagramms in Fig. 2 erläutert werden.

In einem ersten Schritt wird der Signalkomponente Px die andere Signalkomponente Py (0°), welche hier z. B. mit der ersten Signalkomponente Px in Phase ist, überlagert. Die Überlagerung der beiden Signalkomponenten Px und Py bewerkstelligt, wie das Prinzipschaltbild in Fig. 4 zeigt, ein Koppler K. In einem zweiten Schritt wird dann der ersten Signalkomponente Px die andere um 180° phasenverschobene Signalkomponente Py überlagert. Die 0° und 180° Phasenverschiebung der Signalkomponente Py übernimmt ein digitaler Phasenschieber DPS, der zyklisch zwischen den beiden Phasenzuständen 0° und 180° hin- und herschaltet. Am Ausgang a des Kopplers K liegen demzufolge nacheinander im Wechsel das Signal Px + Py (0°) und das Signal Px + Py (180°) vor.

In der Fig. 1 ist die Signalkomponente Py in der 0°- und in der 180°-Phasenlage eingezeichnet. Außerdem sind dort die Signale Px + Py (0°) und Px + Py (180°) dargestellt, welche aus der Überlagerung der Signalkomponente Px mit der nicht phasenverschobenen Signalkomponente Py (0°) und der um 180° phasenverschobenen Signalkomponente Py (180°) hervorgehen. Es ist hier erkennbar, daß das Signal Px + Py (0°) für positive Verdrehwinkel $\Theta$ größere Pegel hat als für entsprechende negative Verdrehwinkel und umgekehrt das Signal Px + Py (180°) für positive Verdrehwinkel Θ kleinere Pegel hat als für entsprechende negative Verdrehwinkel Θ. Daraus folgt, wie auch das Vektordiagramm in Fig. 2 verdeutlicht, daß z. B. bei einem positiven Verdrehwinkel Θ der Übergang vom Signal Px + Py (0°) auf das Signal Px + Py (180°) = Px — Py (0°) einen negativen Pegelsprung und bei einem negativen Verdrehwinkel Θ einen positiven Pegelsprung mit sich bringt. Das Vorzeichen dieses Pegelsprungs gibt also die Richtung an, in welche die Antenne bzw. deren Speisesystem verdreht werden muß, und der Betrag des Pegelsprungs ist ein Maß dafür, um welchen Winkel die Antenne zu verdrehen ist, damit sich eine ihrer Polarisationsebenen mit der Polarisationsebene des Bakensignals deckt.

Wie oben erläutert, erscheint am Ausgang a des Kopplers K durch die Überlagerung der Signalkomponente Px mit der die Phasenzustände 0° und 180° durchlaufenden Signalkomponente Py ein amplitudenmoduliertes Signal. Ein Beispiel des Amplitudenverlaufs U eines solchen amplitudenmodulierten Signals zeigt die Fig. 3. Die Amplitude des am Ausgang a des Kopplers K anliegenden amplitudenmodulierten Signals Px + Py muß nun detektiert werden, um daraus das Steuersignal D für die Polarisationsausrichtung bestimmen zu können. Ein einfaches Verfahren, welches diese Aufgabe mit äußerst geringem Schaltungsaufwand löst, sei nachfolgend an Hand des in Fig. 4 dargestellten Prinzipschaltbild erläutert.

Die Amplitudendetektion wird hier mit einem Amplitudendetektor AM vorgenommen, der z. B. lediglich aus einer Diode bestehen kann. Das Trägersignal des am Punkt a der Schaltung anliegenden amplitudenmodulierten Signals wird vorher in einem Mischer M in eine für den Amplitudendetektor AM geeignete niedere Frequenz umgesetzt. Zwischen dem Mischer M und dem Amplitudendetektor A ist ein Bandpaßfilter BP eingefügt, welches für ein gefordertes möglichst gutes Signal-Rauschleistungsverhältnis des dem Amplitudendetektor AM zugeführten Signals Px + Py sorgt. Um die Forderung nach einem hohen Signal-Rauschleistungsverhältnis zu erfüllen, muß das Bandpaßfilter BP sehr schmalbandig sein. Die Frequenz des am Ausgang des Mischers M vorliegenden Signals ist aber nicht so stabil, daß sie ständig mit dem Durchlaßbereich des schmalbandigen Bandpaßfilters BP übereinstimmt. Es ist daher eine Frequenzregelung vorzunehmen. Dazu wird der Mischer M von dem Ausgangsignal eines spannungsgesteuerten Oszillators VCO angesteuert.

Die Frequenzregelung erfolgt dadurch, daß die Ausgangsfrequenz des spannungsgesteuerten Oszillators VCO während jeder Amplitudenstufe des amplitudenmodulierten Signals, also während der Dauer eines jeden Phasenzustandes 0°, 180° der einen Signalkomponente Py, zwischen zwei Frequenzen fo + Δf und fo — Δf zyklisch umgeschaltet wird. Das amplitudenmodulierte Signal erfährt im Bandpaßfilter BP bei jeder der beiden Frequenzen f1 und f2, auf die das Signal im Mischer M auf Grund der Frequenzumschaltung des spannungsgesteuerten Oszillators (VCO) umgesetzt wird, eine Dämpfung A(f1), A(f2). Aus der Differenz der bei den beiden verschiedenen Frequenzen f1 und f2 hervorgerufenen Dämpfungen A(f1) und A(f2) wird, wie im folgenden noch näher beschrieben, ein Steuersignal DF1 für den spannungsgesteuerten Oszillator VCO abgeleitet. Die Differenz der Dämpfungen A(f1) und A(f2) wird zu Null, wenn die Mittenfrequenz zwischen den beiden Frequenzen f1 und f2 mit der Mittenfrequenz des Bandpaßfilters BP übereinstimmt. In diesem Fall sind nämlich die Dämpfungen A(f1) und A(f2) aufgrund der zur Mittenfrequenz symmetrisch verlaufenden Dämpfungskennlinie gleich groß.

Damit die Regelsteilheit der Frequenzregelung unabhängig vom Pegel des Eingangssignals konstant ist, wird das demodulierte Signal hinter dem Amplitudendetektor AM in einem Logarithmierverstärker LOG logarithmiert. Am Ausgang des Logarithmierverstärkers LOG treten dann nacheinander folgende Amplitudenstufen U1 ... U4 auf :

$$U1 = \log [A(f1) \, (Px + Py)]$$
$$U1 = \log [A(f1)] + \log [Px + Py]$$
$$U2 = \log [A(f2)] + \log [Px + Py]$$
$$U3 = \log [A(f1)] + \log [Px — Py]$$
$$U4 = \log [A(f2)] + \log [Px — Py]$$

Diese Amplitudenstufen U1 ... U4 werden in einem Analog-Digitalwandler AD digitalisiert und zur Berechnung des Steuersignals D für die Polarisationsausrichtung und zur Ableitung des Steuersignals DF1 für den spannungsgesteuerten Oszillator VCO einem Mikroprozessor MP übergeben.

Das Steuersignal DF1 für den spannungsgesteuerten Oszillator VCO wird aus einem Frequenzfehlersignal DF abgeleitet, das sich wie folgt berechnet :

$$DF = \left\{ \begin{array}{l} U1 - U2 \\ U3 - U4 \end{array} \right\} = \log [A(f1)] - \log [A(f2)]$$

$$DF = \log \left[ \frac{A(f1)}{A(f2)} \right] \quad \text{ist} \quad \left\{ \begin{array}{ll} \text{positiv} & \text{für } A(f1) > A(f2) \\ 0 & \text{für } A(f1) = A(f2) \\ \text{negativ} & \text{für } A(f1) < A(f2) \end{array} \right.$$

Das vom Mikroprozessor MP berechnete Frequenzfehlersignal DF wird beispielsweise durch eine Integration in das Steuersignal DF1 umgewandelt und dieses von einem Digital-Analog-Wandler DA in ein analoges Signal umgesetzt und dann dem spannungsgesteuerten Oszillator VCO zugeleitet. Die Umwandlung des Frequenzfehlersignals DF in das Steuersignal DF1 kann entweder im Mikroprozessor MP oder in einer entsprechenden analogen Baugruppe nach dem Digital-Analog-Wandler erfolgen. Das Vorzeichen des Frequenzfehlersignals DF gibt an, in welche Richtung der spannungsgesteuerte Oszillator VCO seine beiden Ausgangsfrequenzen fo + Δf und fo — Δf verschieben muß, und der Betrag des Frequenzfehlersignals DF sagt aus wie weit die Frequenzen geändert werden müssen, damit das umgesetzte Ausgangssignal des Mischers M in den Durchlaßbereich des Bandpaßfilters BP fällt.

Das Steuersignal D für die Polarisationsausrichtung der Antenne berechnet sich folgendermaßen:

$$D = (U1 + U2) - (U3 + U4)$$

$$D = 2 \log \left[ \frac{Px + Py}{Px - Py} \right] \quad \text{ist} \quad \begin{cases} \text{positiv} & \text{für } Py > 0 \\ 0 & \text{für } Py = 0 \\ \text{negativ} & \text{für } Py < 0 \end{cases}$$

**Patentansprüche**

1. Verfahren zum Erzeugen eines Steuersignals zur Polarisationsausrichtung einer Antenne (A) auf ein Bakensignal, bei dem das von der Antenne empfangene Bakensignal von einer Polarisationsweiche (PW) in zwei mit den orthogonalen Polarisationsebenen der Antenne gekoppelte Signalkomponenten zerlegt wird, dadurch gekennzeichnet, daß eine der beiden Signalkomponenten (Px, Py) einer zyklischen Änderung zwischen den Phasenzuständen 0° und 180° unterworfen wird, und daß diese die verschiedenen Phasenzustände durchlaufende Signalkomponente (Py) der anderen Signalkomponente (Px) überlagert und dann ermittelt wird, ob das durch die Überlagerung der beiden Signalkomponenten (Px, Py) entstandene amplitudenmodulierte Signal (Px + Py) beim Übergang der einen Signalkomponente (Py) von einem Phasenzustand in den anderen eine positive oder negative Amplitudenänderung erfährt und um welchen Betrag sich das amplitudenmodulierte Signal ändert, wobei das Vorzeichen der Amplitudenänderung angibt, in welche Richtung die Antenne verdreht werden muß, und der Betrag der Amplitudenänderung ein Maß dafür ist, um welchen Winkel die Antenne zu verdrehen ist, damit sich eine ihrer Polarisationsebenen mit der Polarisationsebene des Bakensignals deckt.

2. Verfahren nach Anspruch 1, dadurch gekennzeichnet, daß das amplitudenmodulierte Signal von einem Mischer (M) in eine andere Frequenz umgesetzt wird und dann über ein schmalbandiges, nur die Signalfrequenz durchlassendes Bandpaßfilter (BP) einem Amplitudendetektor (AM) zugeführt wird, daß der Mischer (M) von einem spannungsgesteuerten Oszillator (VCO) angesteuert wird, dessen Ausgangsfrequenz fo während der Dauer eines jeden Phasenzustandes der einen Signalkomponente zyklisch wechselweise auf je eine von zwei symmetrisch zu der Ausgangsfrequenz liegenden Frequenzen umgeschaltet wird und daß die Steuerspannung (DF1) für den spannungsgesteuerten Oszillator (VCO) aus der Differenz zwischen den Dämpfungen abgeleitet wird, die das amplitudenmodulierte Signal im Bandpaßfilter (BP) bei den beiden Frequenzen erleidet, in die das Signal im Mischer (M) auf Grund der Frequenzumschaltung des spannungsgesteuerten Oszillators (VCO) umgesetzt wird.

3. Verfahren nach Anspruch 2, dadurch gekennzeichnet, daß das Ausgangssignal des Amplitudendetektors (AM) logarithmiert wird.

**Claims**

1. Method of generating a control signal for the alignment of the polarisation of an aerial (A) to a beacon signal, in which the beacon signal received by the aerial is resolved by a polarisation filter (PW) into two signal components coupled with the orthogonal polarisation planes of the aerial, characterised thereby, that one of both the signal components (Px, Py) is subjected to a cyclic change between the phase states 0° and 180° and that this signal component (Py) passing through the different phase states is superposed on the other signal component (Px) and it is then determined whether the amplitude-modulated signal (Px + Py), that has arisen through the superposition of both the signal components (Px, Py), experiences a positive or a negative amplitude change on the transition of the one signal component (Py) from one phase state into the other and by what amount the amplitude-modulated signal changes, wherein the sign of the amplitude change gives the direction, in which the aerial must be turned, and the amount of the amplitude change is a measure of the angle, through which the aerial must be turned, in order that one of its polarisation planes agrees with the polarisation plane of the beacon signal.

2. Method according to claim 1, characterised thereby, that the amplitude-modulated signal is translated by a mixer (M) into a different frequency and then conducted by way of a bandpass filter (BP), which lets only the signal frequency through, to an amplitude detector (AM), that the mixer (M) is driven by a voltage-controlled oscillator (VCO), the output frequency fo of which is cyclically switched alternately to a respective one of two frequencies lying symmetrically to the output frequency fo for the duration of each phase state of the one signal component and that the control voltage for the voltage-controlled oscillator (VCO) is derived from the difference between the attenuations suffered by the amplitude-

EP 0 205 845 B1

modulated signal in the bandpass filter (BP) at both the frequencies, into which the signal is translated in the mixer (M) by reason of the switch-over in frequency of the voltage-controlled oscillator (VCO).

3. Method according to claim 2, characterised thereby, that the output signal of the amplitude detector (AM) is logarithmated.

**Revendications**

1. Procédé de production d'un signal de commande pour orienter la polarisation d'une antenne (A) sur un signal de balise, dans lequel le signal de balise reçu par l'antenne est décomposé par un répartiteur de polarisation (PW) en deux composantes du signal couplées avec les plans orthogonaux de polarisation de l'antenne, caractérisé en ce que l'une des deux composantes (Px, Py) du signal est soumise à une modification cyclique entre les positions de phase 0° et 180° ; et en ce que l'on superpose à l'autre composante (Px) du signal cette composante (Py) du signal qui passe par les différentes positions de phase et en ce que l'on détermine si, lors du passage de la composante mentionnée (Py) du signal d'une position de phase à une autre position de phase, le signal (Px + Py) modulé en amplitude résultant de la superposition des deux composantes (Px, Py) du signal subit une modification d'amplitude positive ou négative et de quel montant le signal modulé en amplitude se modifie, et étant précisé que le signe de la modification en amplitude indique dans quel sens il faut faire tourner l'antenne et que le montant de la modification en amplitude constitue une mesure de l'angle dont il faut faire tourner l'antenne pour que l'un de ses plans de polarisation coïncide avec le plan de polarisation du signal de balise.

2. Procédé selon la revendication 1, caractérisé en ce que le signal modulé en amplitude est converti par un mélangeur (M) en une autre fréquence, puis amené à un détecteur d'amplitude (AM) par l'intermédiaire d'un filtre passe-bande (BP) à bande étroite, ne laissant passer que la fréquence du signal ; en ce que le mélangeur (AM) est commandé par un oscillateur commandé par la tension (VCO) dont, pendant la durée de chaque position de phase de la composante mentionnée du signal, on fait commuter la fréquence de sortie (fo) cycliquement et alternativement sur respectivement l'une de deux fréquences situées symétriquement par rapport à la fréquence de sortie ; et en ce que l'on déduit la tension de commande (DF1) pour l'oscillateur commandé par la tension (VCO) de la différence entre les amortissements que subit, dans le filtre passe-bande (BP), le signal modulé en amplitude pour les deux fréquences dans lesquelles le signal est converti dans le mélangeur (M) sur la base de la commutation de fréquence de l'oscillateur commandé par la tension (VCO).

3. Procédé selon la revendication 2, caractérisé en ce que l'on prend le logarithme du signal de sortie du détecteur d'amplitude (AM).

5

EP 0 205 845 B1

Px + Py (180°)

Px + Py (0°)

Px

Py (180°)

Py (0°)

P

H

FIG. 1

FIG. 2

FIG. 3

FIG. 4